# EUROPEAN PATENT APPLICATION

(11) **EP 3 512 155 A1**
(43) Date of publication of application: **17.07.2019**
(21) Application number: 18158831.0
(22) Date of filing: 27.02.2018
(51) Int. Cl.: H04L 9/08, H04L 9/32, G06F 21/62, H04L 29/08

(54) **METHOD AND SYSTEM FOR PROVIDING SECURE ACCESS TO ARTIFACTS IN A CLOUD COMPUTING ENVIRONMENT**

(30) Priority: 15.01.2018 EP 18151637
(71) Applicant: Siemens Aktiengesellschaft, 80333 München (DE)
(72) Inventor: B, Adinarayana, 560029 Bangalore, Karnataka (IN); Kommineni, Ramya, 560100 Bangalore, Karnataka (IN)
(74) Representative: Isarpatent

(57) **Abstract**

The present invention relates a method and system for providing secure access to artifacts in cloud computing environment. In an embodiment, the method comprises receiving a request for accessing an artifact from a tenant device(s) (134A-N) via a communication network (104). The request comprises an access token having a unique ID associated with the tenant device(s) (134A-N) and an artifact identifier. Further, the method comprises validating the access token with respect to the artifact requested to be accessed and the unique ID associated with the tenant device(s) (134A-N). The access token is unique to the tenant device(s) (134A-N). Furthermore, the method comprises providing access to the artifact to the tenant device(s) (134A-N) based on the successful validation of the access token.

## Description

The present invention relates to the field of cloud computing systems, and more particularly relates to a method and system for providing secure access to artifacts in a cloud computing environment.

With advent of cloud computing technology, a large number of devices are connected to a cloud computing system via the Internet. The devices may be remotely located from the cloud computing system. The devices can be equipments, sensors, actuators, robots, machinery in an industrial set-up(s). The devices can be medical devices and equipments in a healthcare facility. The devices can be home appliances or office appliances in a residential or commercial establishment.

The cloud computing system may enable remotely configuring, monitoring, controlling, and maintaining connected devices. Also, the cloud computing system may facilitate storing large amounts of data periodically gathered from the devices, analyzing the large amounts of data, and providing insights e.g., Key Performance Indicators, Outliers) and alerts to operators, field engineers or owners of the devices via graphical user interface (e.g., of web applications). The insights and alerts may enable to control and maintain the devices, leading to efficient and fail-safe operation of the devices. The cloud computing system may also enable modifying parameters associated with the devices and issues control commands via the graphical user interface based on the insights and alerts.

The cloud computing system may comprise a plurality of servers or processors (also known as 'cloud infrastructure'), which are geographical distributed, connected with each other via a network. A dedicated platform (hereinafter referred to as 'cloud platform') is installed on the servers/processors for providing above functionality as an application (hereinafter referred to as 'cloud application'). The cloud platform may comprise a plurality of software programs executed on one or more servers or processors of the cloud computing system to enable delivery of the requested applications to the devices and its users (hereinafter referred to as tenants).

One or more artifacts are deployed in the cloud computing system to provide different applications to the tenants. The artifacts may include applications, simulation models, engineering configuration, application programming interfaces (APIs), and so on. For example, an application for monitoring operation of robots in a manufacturing facility may be deployed as an artifact. The application may be capable of analyzing the data collected from the robots over a period of time. The tenant may subscribe to cloud applications which analyzes data associated with robots using the application, and displays the outcome of analysis (e.g., outliers) to the tenant via a web application on the tenant device.

The cloud platform may enable a plurality of developers to develop the one or more artifacts. Also, the cloud platform may facilitate providers to deploy one or more artifacts developed by the developers in the cloud computing system to deliver cloud applications to one or more tenants of the cloud platform. A tenant may get access to artifacts deployed by different providers via the cloud platform by subscribing corresponding cloud applications. In other words, different tenants may have access to different artifacts from different providers. It is possible that one or more unauthorized tenants may get access to artifacts of different providers without subscribing to the corresponding cloud applications. The unauthorized tenants may access sensitive information belonging to authorized tenants as well as perform one or more vulnerable operations (such as modifying parameters) using the artifacts. Thus, unauthorized access of the artifacts may lead to higher security risks.

In light of above, there is a need for a system for providing secure access to artifacts deployed in the cloud computing environment to authorized tenants.

Therefore, it is an object of the present invention to provide a method and system for providing secure access to artifacts deployed in a cloud computing environment to the authorized tenants.

The object of the present invention is achieved by a method for providing secure access to artifacts deployed in a cloud computing environment. The method comprises receiving a request for accessing an artifact from a tenant device via a communication network. The request comprises an access token having a unique identifier (ID) associated with the tenant device, and an artifact identifier associated with the artifact. The access token comprises one or more token attributes with the unique ID associated with the tenant device and the artifact identifier.

The one or more token attributes comprises a random key, a current time-stamp, use attribute, permission attribute and the like.

The artifact may include applications (application for monitoring a robot), simulation models, engineering configuration, digital twin models, code snippets, application programming interfaces (APIs), security applications, firmware and so on. The tenant device wants to access the artifact to avail a cloud applications.

The method further comprises validating the access token with respect to the artifact requested to be accessed using the unique ID associated with the tenant device. The access token is unique to the tenant device. Also, the access token is valid during an active session between the artifact and the tenant device. Prior to validating the access token, it may be determined whether there exist an active session with the tenant device based on the tenant identifier and the artifact identifier. An active session enables communication between the tenant device and one or more artifacts. The active session may be specific to each artifact, i.e., the tenant device can access a specific artifact over the active session. Alternatively, the active session may be specific to each tenant device, i.e., the tenant device can access different artifacts over the active session. If it is determined that there exists no active session with the tenant device, then a new active session is established with the tenant device and it is determined whether the access token is valid or not. Furthermore, the method comprises providing access to the artifact to the tenant device based on the successful validation of the access token.

In a preferred embodiment, the method further comprises generating the access token for accessing the artifact. Further, the method comprises assigning the access token to the tenant device for accessing the artifact. Moreover, the method comprises storing the access token corresponding to the tenant device in a repository.

In another preferred embodiment, in validating the access token with respect to the artifact requested to be accessed using the unique ID associated with the tenant device, the method comprises determining whether the access token received from the tenant device is valid based on the unique ID associated with the tenant device. If the access token is determined to be valid, then the method comprises determining one or more tenant privileges associated with the access token. The one or more tenant privileges comprises read only, write only, read and write, read, write and modify, delete, add, full-text access, access for basic information, options for data analytics on artifacts, option to store, restore or update any information related to the artifacts and the like. The one or more tenant privileges may not be limited to those described herein but may comprise any further privileges assigned to the tenant devices. Further, the method comprises sending a validation successful message to the tenant device based on the determined one or more tenant privileges and further provides access to the requested artifact.

In yet another preferred embodiment, in validating the access token with respect to the artifact requested to be accessed using the unique ID associated with the tenant device, the method comprises determining whether the access token received from the tenant device is valid based on the artifact identifier. If the access token is determined to be valid, then the method further comprises determining whether the access token is used previously or not. If the access token is not used previously, then the method comprises sending a validation successful message to the tenant device and providing an access to the requested artifact.

In further another preferred embodiment, the method comprises sending a validation error message to the tenant device if the access token is invalid.

In still another preferred embodiment, the method comprises sending a validation error message to the tenant device if the access token is used previously.

The object of the present invention is also be achieved by a cloud computing system for providing secure access to artifacts. The cloud computing system may comprise one or more processing units and one or more memory units coupled to the one or more processing units. The one or more memory units comprise an authentication module stored in the form of machine-readable instructions and executable by the one or more processing units.

The authentication module is configured for performing the method described above.

The object of the invention can also be achieved by a cloud computing environment comprising a system and a plurality of tenant devices communicatively coupled to the system via a network to perform the method described above.

The object of the invention can also be achieved by a computer-program product, having machine-readable instructions stored therein, that when executed by the one or more processing units, causes the one or more processing units to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a schematic representation of a cloud computing environment capable of providing secure access to artifacts, according to an embodiment of the present invention;
- FIG 2: is a process flowchart illustrating an exemplary method of providing secure access to artifacts in the cloud computing environment, according to the embodiment of the present invention;
- FIG 3: is a block diagram of a validation module capable of validating an access token with respect to artifact requested to be accessed, according to the embodiment of the present invention;
- FIG 4: is a process flowchart illustrating an exemplary method of validating the access token with respect to the artifact requested to be accessed, according to the embodiment of the present invention;
- FIG 5: is a process flowchart illustrating an exemplary method of validating the access token with respect to the artifact requested to be accessed, according to another embodiment of the present invention; and
- FIG 6: is a block diagram of cloud hardware and resources, such as those in shown in FIG 1, showing various components to implement embodiments of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

The present invention discloses a method and system for providing a secure access to an artifact by validating an access token based on a tenant identifier and an artifact identifier. The present invention validates the access token based on the number of times the access token has been used previously. This mechanism ensures data security between tenant devices and a cloud computing system. Further, the present invention improves the performance of the cloud platform by having one time validation of the access token assigned to the tenant devices. Successfully validated tenant devices with detailed information are stored in a repository. When subsequent request(s) or response(s) are received from the tenant devices, the tenant devices are validated against the stored information in the repository using one or more unique identifiers.

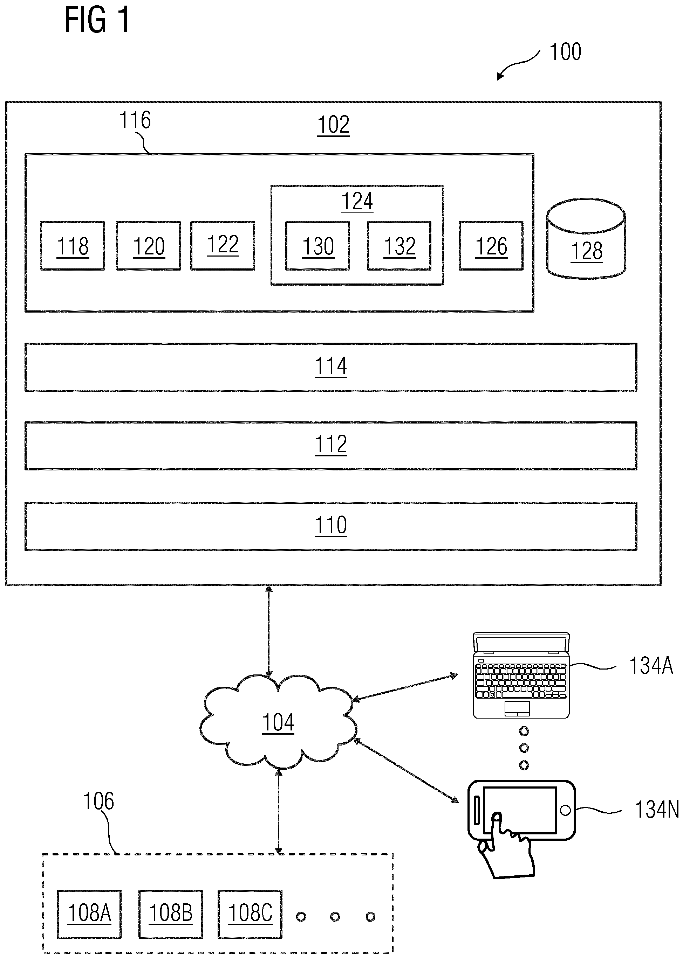

FIG 1 is a schematic representation of a cloud computing environment 100 capable of providing secure access to artifacts, according to an embodiment of the present invention. Particularly, FIG 1 depicts the cloud computing system 102 which is capable of delivering cloud applications for managing an industrial plant 106 comprising assets 108A-N. The cloud computing system 102 is connected to the assets 108A-N in the industrial plant 106 via a network 104 (e.g., Internet). The assets 108A-N may include servers, robots, switches, automation devices, motors, valves, pumps, actuators, sensors and other industrial equipments. Although, FIG 1 illustrates the cloud computing system 102 connected to one industrial plant 106, one skilled in the art can envision that the cloud computing system 102 can be connected to several industrial plants located at different locations via the network 104.

Further, the cloud computing system 102 is also connected to tenant device(s) 134A-N via the network 104. The term "tenant devices" may alternatively be referred as "user devices" or "client devices" throughout the specification. The tenant devices 134A-N can access the cloud computing system 102 for managing and accessing artifacts using an access token. The tenant devices 134A-N store the information associated with the access token in a repository, such as repository 128. Unlike the conventional systems, where the tenant devices 134A-N store huge amount of data related to certificates and other configuration information, the tenant devices 134A-N of the present invention store the information associated with the access token. This improves the performance of the tenant devices 134A-N.

In order to access the cloud applications, one or more artifacts are required to be deployed on the cloud platform 114, which are then accessed by personnel and assets in the industrial plant 106 to avail the cloud applications. Therefore, the cloud computing system 102 is provided which is capable of providing secure access to artifacts. Exemplary artifacts may include applications (application for monitoring plant), simulation models, engineering configuration, digital twin models, code snippets, APIs, security applications, firmware and so on.

The cloud computing system 102 is also connected to devices 134A-N via the network 104. The devices 134A-N can access the cloud computing system 102 for managing and accessing artifacts, and accessing cloud applications. The devices 134A-N can be a laptop computer, desktop computer, tablet computer, smartphone and the like. The devices 134A-N can access cloud applications (such as providing performance visualization of the assets 108A-N) via a web browser.

The industrial plants 106 which have subscribed to the cloud applications from the cloud computing system 102 are hereinafter referred to as 'tenants' in the context of subscribing access to one or more artifacts deployed on the cloud computing system 102. The industrial plants 106 have subscribed to the cloud applications via the tenant devices 134A-N.

The cloud computing system 102 comprises a cloud interface 110, cloud hardware and OS 112, cloud platform 114, and repository 128. The cloud interface 110 enables communication between the cloud platform 114 and the industrial plant 106. Also, the cloud interface 110 enables communication between the cloud platform 114 and the tenant devices 134A-N.

The cloud hardware and OS 112 may include one or more servers on which an operating system (OS) is installed. The one or more servers comprises one or more processing units, one or more storage devices for storing data, and other peripherals required for providing cloud functionality. The cloud platform 114 is a platform which implements functionalities such as data storage, data analysis, data validation, data visualization, data communication on the cloud hardware and OS 112 via APIs and algorithms; and delivers the aforementioned cloud services using artifacts. The cloud platform 114 employs an authentication module 116 for providing a secure access to artifacts deployed on the cloud computing system 102. The cloud platform 114 may comprise a combination of dedicated hardware and software built on top of the cloud hardware and OS 112.

The authentication module 116 is stored in the form of machine-readable instructions and executable by the cloud platform 114. The authentication module 116 comprises a request handler 118, a validation module 120, a tenant access management module 122, an artifact management module 124 and a token management module 126. The artifact management module 124 further comprises an artifact development module 130, and an artifact provisioning and monitoring module 132.

The request handler 118 is configured to receive a request for accessing an artifact from tenant device (e.g., tenant device 134A) via the network 104. The request comprises an access token having a unique identifier (ID) associated with the tenant device(s) 134A-N and an artifact identifier. The unique ID associated with the tenant device(s) 134A-N may be a unique sequence of numbers assigned specific to the tenant device(s) 134A-N. The unique ID associated with the tenant device(s) 134A-N may be generated using any mechanisms known in the art. Similarly, the artifact identifier may be unique identifier assigned specific to artifacts deployed on the cloud platform 114. The artifact identifier may be generated using any mechanisms known in the art.

The access token can be used by specific tenant device 134A for securely accessing subscribed artifacts. The access token comprises one or more token attributes and the unique ID associated with the tenant device(s) 134A-N and the artifact identifier. The one or more token attributes comprises a random key, current time-stamp, use attribute, permission attribute and the like.

The validation module 120 is configured for validating the access token with respect to the artifact requested to be accessed and the unique ID associated with the tenant device 134A. The access token is unique to the tenant device 134A. In an embodiment, the access token is valid during the active session between the artifact and the tenant device 134A-N. For example, it is first determined whether there exist an active session with the tenant device 134A-N based on the tenant identifier and the artifact identifier. An active session enables communication between the tenant device 134A-N and one or more artifacts. In one embodiment, the active session may be specific to each artifact, i.e., the tenant device 134A-N can access a specific artifact over the active session. In another embodiment, the active session may be specific to each tenant device 134A-N, i.e., the tenant device 134A-N can access different artifacts over the active session. If there exists an active session with the tenant device 134A-N, then the access token is validated further with respect to the tenant identifier and the artifact identifier. On the other hand, if it is determined that there exists no active session with the tenant device 134A-N, then a new active session is established with the tenant device 134A-N and then the access token is validated with respect to the tenant identifier and the artifact identifier.
The process of validation of the access token takes place in two stages. In a first stage, the validation module 120 is configured for determining whether the access token received from the tenant device(s) 134A-N is valid based on the unique ID associated with the tenant device(s) 134A-N. The unique ID associated with the tenant device(s) 134A-N received in the request is compared with a pre-stored unique ID associated with the tenant device(s) 134A-N in the repository 128. If the unique ID associated with the tenant device(s) 134A-N matches with the pre-stored unique ID associated with the same tenant device(s) 134A-N, then the validation module 120 is configured to determine one or more tenant privileges associated with the access token. The one or more tenant privileges may be unique to the tenant device(s) 134A-N. For example, the tenant device 134A may have the tenant privileges such as read and write only. However, the tenant device 134B may have the tenant privileges such as read, write and edit. The tenant privileges are dependent on user profile of each tenant devices 134A-N. In an embodiment, the one or more privileges may be predefined for each user of the tenant device(s) 134A-N when a particular artifact is assigned to the tenant device 134A-N. In another embodiment, the one or more tenant privileges may be defined during the registration of the tenant device(s) 134A-N based on privileges assigned to the tenant associated with the tenant devices 134A-N. The one or more tenant privileges may be modified, added or removed by the tenant administrator.

If the unique ID associated with the tenant device(s) 134A-N does not match with the pre-stored unique ID associated with the same tenant device(s) 134A-N, then the validation module 120 is configured to discard the request from the tenant device(s) 134A-N by sending a validation error message to the tenant device(s) 134A-N. Upon which, the tenant device(s) 134A-N may request for registration with the cloud computing system 102. The process of registration of the tenant device(s) 134A-N is further explained below.

In a second stage, the validation module 120 is configured for determining whether the access token received from the tenant device(s) 134A-N is valid based on the artifact identifier. The artifact identifier received in the request is compared to a pre-stored artifact identifier in the repository 128. If the artifact identifier comprised in the request matches with the pre-stored artifact identifier in the repository 128, then the validation module 120 is configured for determining whether the access token is used previously or not. This determination is made based on the 'use' attribute of the access token. If the 'use' attribute of the access token is marked as false, then the access token has not been used previously. In other words, the tenant device(s) 134A-N is using the access token for accessing the artifact for the first time. In this case, the validation module 120 is configured for sending a validation successful message to the tenant device(s) 134A-N. On the contrary, if the 'use' attribute of the access token is marked as true, then the access token has been used previously by the tenant device(s) 134A-N. In this case, the validation module 120 is configured for discarding the request from the tenant device(s) 134A-N by sending a validation error message to the tenant device(s) 134A-N.

If the artifact identifier received in the request does not match with the pre-stored artifact identifier in the repository 128, then the validation module 120 is configured for discarding the request from the tenant device(s) 134A-N by sending a validation error message to the tenant device(s) 134A-N.

The tenant access management module 122 is configured for providing access to the artifact to the requested tenant device(s) 134A-N based on the successful validation of the access token. In an embodiment, providing access to the requested artifact comprises performing at least one operation requested by the tenant device 134A-N by executing the artifact deployed in the cloud computing system 102. The at least one operation may include, but not limited to, modifying information associated with the artifact, publishing an artifact based on the one or more tenant privileges associated with the requesting tenant device 134A-N, and the like.

The tenant access management module 122 is also configured for storing the access token associated with the corresponding tenant device(s) 134A-N in the repository 128 upon successful validation of the access token. If in case the validation of the access token is unsuccessful, then the tenant access management module 122 is configured for updating the corresponding entry of the access token in the repository 128. The access to the artifact to the tenant device(s) 134A-N may be for a particular duration of time. The duration of time may be predefined in the one or more tenant privileges. Also, the duration of the time may vary for each of the tenant devices 134A-N based on subscription by the tenant and permissions set by the tenant administrator.

The artifact management module 124 is configured for managing access to artifacts. The artifact management module 124 comprises an artifact development module 130 and artifact provisioning and monitoring module 132.

The artifact development module 130 is configured for generating a development environment for developing artifacts. The development environment is made accessible via a graphical user interface of the tenant device 134A-N. The artifact development module 130 is configured for generating an artifact package of the artifact using the development environment. If the artifact is an application, the artifact package may include binary code and a manifest file. Additionally, the artifact development module 130 is configured for testing the artifact package using one or more test scenarios via the development environment. The artifact development module 130 is configured to store the artifact in the repository 128 for validation and deployment purposes. The artifact development module 130 is configured to receive feedback on the artifact from the validation module 120, the tenant access management module 122 and the tenant devices 134A-N. The artifact development module 130 is configured to process the feedback and make necessary changes to the artifact so that the artifact can be deployed and used without any issues.

The artifact development module 130 is configured for defining and managing one or more artifacts. For example, the artifact development module 130 comprises one or more unique IDs assigned to one or more artifacts. Further, the artifact development module 130 is capable of generating new artifacts and updating the new artifacts in the repository 128. The artifact development module 130 also assigns the respective unique ID for each of the generated artifacts. The artifact development module 130 also manages the modification of the artifacts and/or removal of the artifacts from the repository 128.

The artifact provisioning and monitoring module 132 is configured to provision the deployed artifact to one or more tenant 106 of the cloud platform 114. In other words, artifact provisioning and monitoring module 132 is configured to assign the artifact to requesting tenant devices 134A-N. Accordingly, each tenant is assigned an artifact to its tenant devices 134A-N. In exemplary implementation, said each tenant assigns at least one role defined for the artifact assigned to said each tenant. Consequently, the tenant device 134A-N has permissions corresponding to the assigned role to access the artifact. The roles and permissions corresponding to the artifact assigned to the tenant devices 134A-N are stored in the lookup table maintained in the repository 128. In an embodiment, the roles and permissions corresponds to the one or more tenant privileges described herein.

Additionally, the artifact provisioning and monitoring module 132 is configured to monitor behavior of the artifact deployed in the productive environment during runtime (execution time), and provide continuous feedback to the artifact development module 130, the tenant access management module 122, and the tenants 106 via the tenant devices 134A-N.

The artifact management module 124 is configured for categorizing the artifacts as public and private. For example, if an artifact is categorized as private and configured as secure, the tenant device(s) 134A-N is allowed to access such artifacts only if tenant device(s) 134A-N has the one or more privileges to access such private artifacts. In an embodiment, such one or more privileges may comprise roles and permissions associated with the tenant device 134A-N. The determination of whether the tenant device(s) 134A-N has such privilege for accessing a private artifact is determined using the access token. In other words, the tenant device(s) 134A-N is allowed to access private artifacts only upon successful validation of the access token. In another exemplary embodiment, if an artifact is categorized as public, then all tenant device(s) 134A-N can access such artifacts categorized as public without having to use the access token.

The token management module 126 is configured for generating the access token for accessing the artifacts. In an embodiment, the access token may be generated by any known mechanisms in the art. The access tokens are generated randomly for a specific sessions to access a specific artifact. In an exemplary embodiment, the token management module 126 may use SHA-2(256) algorithm for encrypting information associated with the access token and storing the information associated with the access token in the repository 128 in a predefined data format. Since the token management module 126 allows the tenant device(s) 134A-N to use the encrypted access token generated at the cloud platform 114 while requesting access to a specific artifact, the processing speed at the tenant device(s) 134A-N is increased as they need not have to encrypt the data at their end each time the tenant devices 134A-N requests access to the artifact with the cloud platform 114.

In an exemplary embodiment, the information associated with the access token may include a token value comprising a string value, a Boolean used, a string clientused, string permission and other attributes. The string value is a token value which acts as a token identifier. The Boolean used indicates whether the access token is used or not. The string clientused indicates a unique ID associated with the tenant device(s) 134A-N which has used the access token. The string permission indicates the one or more tenant privileges defined for the tenant device(s) 134A-N, for example, read, write, read or write and so on. The access tokens are generated for a specific artifact having specific tenant privileges and at a particular timestamp. The access tokens are generated randomly and such access tokens further comprises a randomKey attribute associated with it. Further, the information associated with the access token may further include the randomKey and an artifact identifier. For example, one access token is randomly generated for one tenant device(s) 134A-N and for accessing a particular artifact. The extent of access to such artifact is defined by the one or more privileges. In one embodiment, every token is used by the tenant device(s) 134A-N once. In other embodiments, the access token can be used by the tenant device(s) 134A-N for number of times specified in the access token.

When the access token is used by the tenant device(s) 134A-N exceeding the number of times specified in the access token, the validation fails and the tenant device(s) 134A-N is denied access to the artifact. The access token generated are unique for each tenant device(s) 134AN. In other words, no two tenant device(s) 134A-N shall have the same access token assigned to it. Moreover, the tenant device(s) 134A-N cannot access the same access token assigned to it more than once. This means that every time the tenant device(s) 134A-N requests to access an artifact, the access token is first validated and based on which the tenant device(s) 134A-N is provided access to the artifact. This also ensures that access tokens cannot be used by intruders. In such a case, the tenant devices other than the one registered who are using the access tokens for communication with the cloud platform 114 can be easily identified and marked as intruder. This information is immediately updated in the repository 128 such that any requests from such tenant devices who are not registered is directly discarded and the communication is further blocked for such tenant devices. The process of validation of the access token is explained in greater detail below.

In an embodiment, when the tenant device(s) 134A-N is not assigned any access token, however sends a request to access a specific artifact, the token management module 126 requests the tenant device 134A-N to register with the cloud platform 114 to get access to the artifact. During the process of registration, a random access token is generated for the new tenant device(s) 134A-N and the random access token is assigned to the tenant device(s) 134A-N for accessing the requested artifact. Although not specified, the registration of the tenant device(s) 134A-N may include registering and storing any other information associated with the tenant device(s) 134A-N and creating a user profile for each of the registered tenant device(s) 134A-N. Each user profile is unique to each of the tenant device(s) 134A-N registered with the cloud platform 114. Each user profile may have specific permissions and privileges defined for the respective tenant device(s) 134A-N. The registration of the tenant device(s) 134A-N may be for specific duration. A tenant device(s) 134A-N may be registered for a specific period of time than the other. This is based on the information associated with the tenant device(s) 134A-N.

Once the access token is assigned to the tenant device(s) 134A-N, the access token is shared with the tenant device(s) 134A-N in order to enable the tenant device(s) 134A-N to access the artifact from the next request. Then, the tenant device(s) 134A-N may request the cloud platform 114 to provide access to the specific artifact using the assigned access token. Since the tenant device(s) 134A-N is using the access token for the first time and is pre-registered with the cloud platform 114 for accessing the requested artifact, the tenant device(s) 134A-N is validated based on the access token and is provided access for the requested artifact. In a case where the tenant device(s) 134A-N has accessed the artifact and has terminated the session with the cloud platform 114, and further upon re-establishing the session with the cloud platform 114 if the tenant device(s) 134A-N uses the same access token again for requesting access for the same artifact, the token management module 126 along with validation module 120 discards such request. This is because any tenant device(s) 134A-N cannot use the same access token more than once for accessing the artifact.

In a case where the tenant device(s) 134A-N uses the same access token for requesting access to another artifact for which the access token was not assigned for, then the tenant device(s) 134A-N shall be denied from accessing any such other artifact for which tenant device(s) 134AN is not registered for.

Further, the token management module 126 is configured for assigning the access token to the tenant device(s) 134A-N for accessing the artifact. Also, the token management module 126 is configured for storing the access token corresponding to the tenant device(s) 134A-N in the repository 128.

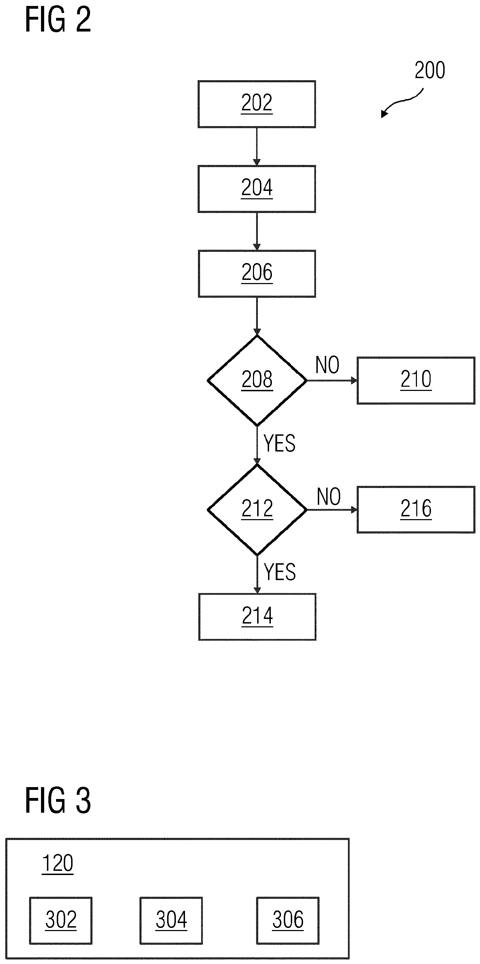

FIG 2 is a process flowchart illustrating an exemplary method 200 of providing secure access to artifacts in a cloud computing environment 100, according to an embodiment of the present invention. At step 202, an access token for accessing an artifact is generated. The access token is generated during the registration of the tenant device 134A-N with the cloud platform 114. When a tenant device 134A-N sends a request for accessing a specific artifact, and if the tenant device 134A-N is communicating with the cloud platform 114 for the first time, then the cloud platform 114 shall initiate the generation of specific access token unique to the tenant device 134A-N and unique to the specific artifact which is requested to be accessed. At step 204, the access token is assigned to a tenant device(s) 134A-N for accessing the artifact. The access token is unique to the tenant device(s) 134A-N. The access token is valid during the active session between the artifact and the tenant device. At step 206, the access token corresponding to the tenant device(s) 134A-N is stored in a database, such as repository 128.

At step 208, it is determined whether a request for accessing the artifact is received. If it is determined that the request for accessing the artifact is not received, then at step 210, the determination is further continued till a request for accessing the artifact is received. If it is determined that the request for accessing the artifact is received, the step 212 is performed. The request comprises an access token having a unique ID associated with the tenant device(s) 134A-N and an artifact identifier. At step 212, the access token is validated with respect to the artifact requested to be accessed and the unique ID associated with the tenant device(s) 134AN. In an embodiment, the access token is validated in a manner described above. If the access token is validated successfully, then at step 214, access to the artifact is provided to the requesting tenant device(s) 134A-N. Alternatively, if validation of the access token is unsuccessful, then at step 216, the request is discarded and a validation error message is sent to requesting tenant device(s) 134A-N.

FIG 3 is a block diagram of a validation module 120 capable of validating an access token with respect to an artifact requested to be accessed, according to an embodiment of the present invention. The validation module 120 comprises a tenant validation module 302, a request verification module 304 and a token attribute validation module 306. The tenant validation module 302 is configured for determining whether the access token received from the tenant device(s) 134A-N is valid based on the unique ID associated with the tenant device(s) 134A-N. The tenant validation module 302 is configured for comparing the unique ID tenant device received in the request with a pre-stored unique ID associated with the tenant device(s) 134A-N in the repository 128. If the unique ID tenant device in the request matches with the pre-stored unique ID associated with the tenant device(s) 134A-N in the repository 128, then the tenant validation module 302 is configured for determining one or more tenant privileges associated with the access token and declares the validation of the access token to be successful. Then, the tenant validation module 302 is configured for feeding the validation result to the request verification module 304. If in case the unique ID tenant device in the request does not match with the pre-stored unique ID associated with the tenant device(s) 134A-N in the repository 128, then the tenant validation module 302 is configured for sending validation error message to the requested tenant device(s) 134A-N and discards the request.

The request verification module 304 is configured for determining whether the access token received from the tenant device(s) 134A-N is valid based on the artifact identifier (ID). The artifact ID which is present in the request is compared with a pre-stored artifact ID in the repository 128. It is determined whether the artifact ID which is present in the request matches with the pre-stored artifact ID in the repository 128. For example, the repository 128 can comprise a lookup table where each tenant device(s) 134A-N is mapped to artifact IDs based on subscription of the artifacts by tenants associated with the tenant devices 134A-N. If artifact ID in the request matches with the artifact ID stored in the lookup table for the specific tenant device(s) 134A-N, then the request verification module 304 declares that the validation is successful. Once the artifact ID, present in the request is validated, the request verification module 304 feeds this validation result to the token attribute validation module 306. In an embodiment, the request verification module 304 sends a validation successful message to the tenant device(s) 134A-N. In an embodiment, the tenant device(s) 134A-N is provided access to the requested artifact based on the successful validation of the unique ID associated with the tenant device(s) 134A-N and the artifact ID. In another exemplary embodiment, the tenant device(s) 134A-N is provided access to the requested artifact based on successful validation of the unique ID associated with the tenant device(s) 134A-N, the artifact ID and if the access token is determined to be used once.

The token attribute validation module 306 is configured for determining whether the access token is used previously or not. The token attribute 'Boolean used' present in the received access token indicates whether the access token is used previously or not. For example, if the 'Boolean used' is marked as false, then the access token is identified to be not used previously. For example, the Boolean used attribute is compared with a pre-stored 'use attribute' associated with the same access token in the repository 128. If the pre-stored 'use attribute' is marked as 'false', then the access token is identified to be not used previously. Also, the token attribute validation module 306 is configured for informing the tenant access management module 122 on the validation success of the access token so that the tenant device(s) 134A-N is provided access for the requested artifact. In case if the 'Boolean used' is marked as true, then the access token is identified to be used previously. For example, the Boolean used attribute is compared with a pre-stored 'use attribute' associated with the same access token in the repository 128. If the pre-stored 'use attribute' is marked as 'true', then the access token is identified to be used previously. In this case, the token attribute validation module 306 is configured for discarding the request from the tenant device(s) 134A-N and sends a validation error message to the tenant device(s) 134A-N. Further, the token attribute validation module 306 is configured for informing the tenant access management module 122 on the validation failure of the access token so that the tenant device(s) 134A-N is denied access for the requested artifact. Further, the token attribute validation module 306 is configured for transferring the entry of the access token in the lookup table to a secondary storage (not shown) for future reference. This helps in improving the performance of the cloud platform 114 for maintaining the information of the access token in the repository 128 such that all unused entries are removed.

Consider, for example, if a tenant device 134A wishes to access an application-B in the cloud platform 114. Assuming that the tenant device 134A is registered for accessing application-A. In this case, the tenant device 134A requests the cloud platform 114 for accessing the application-B using an access token. According to the embodiments described herein, the tenant device 134A is first authenticated based on the unique ID associated with the tenant device 134A. This indicates whether the tenant device 134A is even allowed to send any requests to the cloud platform 114. If the unique ID associated with the tenant device 134A is validated to be authorized by the tenant validation module 302, the process then proceeds further in determining whether the validated tenant device 134A is authorized to access the requested application-B based on the artifact identifier. This process is taken care by the request verification module 304. The request verification module 304 checks if the tenant device 134A is allowed to access the application-B using a look-up table in the repository 128. If it is determined that the tenant device 134A is not registered for accessing the application-B, then the request is discarded and the validation error message is sent to the tenant device 134A. In another scenario, assume that the tenant device 134A is registered for accessing application A and application B. In such as case, considering the same example where a request for accessing application-B is received from the tenant device 134A, then the request verification module 304 successfully authorizes the tenant device 134A to access the application-B as the tenant device 134A is registered for accessing the application-B. Before providing access to the tenant device 134A for accessing application-B, the access token is also validated based on whether the access token is used previously or not. If the access token is determined as not used previously, then the tenant device 134A is provided access to application B. On the contrary, if the access token is determined as used previously, then the tenant device 134A is denied access to application B although it is registered to access application-B. This is because any tenant device(s) 134A-N can use the access token only once for accessing artifact.

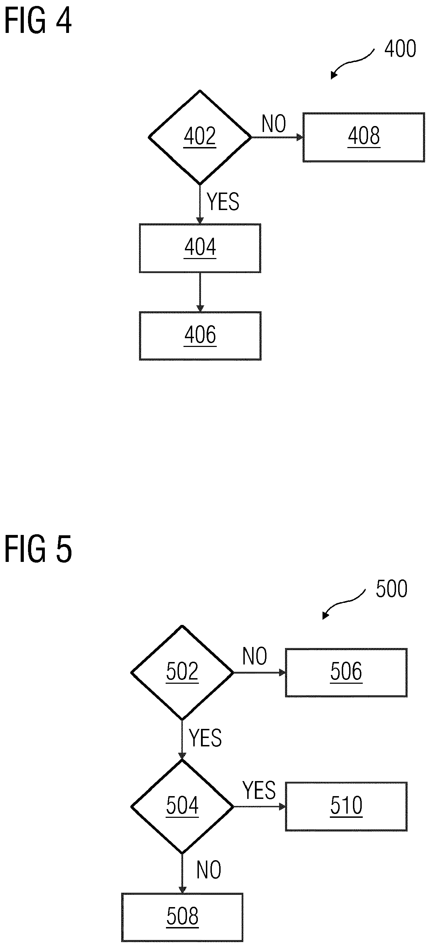

FIG 4 is a process flowchart illustrating an exemplary method 400 of validating the access token with respect to the artifact requested to be accessed, according to an embodiment of the present invention. At step 402, it is determined whether the access token received from the tenant device(s) 134A-N is valid based on the unique ID associated with the tenant device(s) 134A-N. If it is determined that the access token is valid, then at step 404, the one or more tenant privileges associated with the access token is determined. Further, at step 406, a validation successful message is sent to the tenant device(s) 134A-N based on the determined one or more tenant privileges. If it is determined that the access token is not valid, then at step 408, a validation error message is sent to the tenant device(s) 134A-N.

FIG 5 is a process flowchart illustrating an exemplary method 500 of validating the access token with respect to the artifact requested to be accessed, according to another embodiment of the present invention. At step 502, it is determined whether the access token received from the tenant device(s) 134A-N is valid based on the artifact identifier. If the access token is determined to be valid, then at step 504, it is further determined whether the access token is used previously or not. If the access token is not used previously, then at step 508, a validation successful message is sent to the tenant device(s) 134A-N. If the access token is used previously, then at step 510, a validation error message is sent to the tenant device(s) 134A-N. On the other hand, if the access token is determined to be invalid, then at step 506, the request is discarded and a validation error message is sent to the tenant device(s) 134A-N.

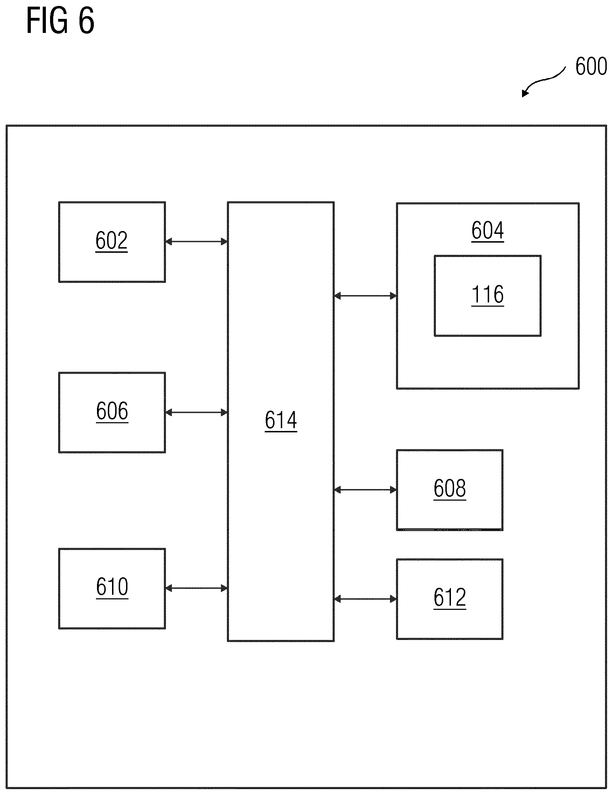

FIG 6 is a block diagram of cloud hardware and resources, such as those in shown in FIG 1, showing various components to implement embodiments of the present invention. In an embodiment, the cloud computing system 600 may be similar to the cloud computing system 102 as shown in FIG 1. The cloud computing system 600 includes a processor(s) 602, a memory 604, a storage unit 606, an input-output unit 608, a communication interface 610, a display unit 612, and a bus 614.

The processor(s) 602, as used herein, may be one or more processing units (e.g., servers) capable of processing requests from the tenant device(s) 134A-N, and also from the plant environment 106. The processor(s) 602 may also include embedded controllers, such as generic or programmable logic devices or arrays, application specific integrated circuits, or FPGAs (Field Programmable Gate Arrays) and the like. The memory 604 may be volatile memory and non-volatile memory. The memory 604 includes an authentication module 116 for providing secure access to an artifact in cloud computing environment 100, according to one or more embodiments described herein. Memory elements may include any suitable memory device(s) for storing data and machine-readable instructions.

The authentication module 116 may be stored in the form of machine-readable instructions on any of the above-mentioned storage media and may be executed by the processor(s) 602. For example, a computer program may include machine-readable instructions which when executed by the processor(s) 602, may cause the processor(s) 602 to receive a request for accessing an artifact from the tenant device(s) 134A-N via the communication network 104, validate information associated with the access token with respect to the artifact requested to be accessed and the unique ID associated with the tenant device(s) 134A-N, and provide access to the artifact to the tenant device(s) 134A-N based on the successful validation of the access token, according to the teachings and herein described embodiments of the present subject matter. In one embodiment, the program may be included on a compact disk-read only memory (CD-ROM) and loaded from the CD-ROM to a hard drive in the non-volatile memory.

The storage unit 606 includes a repository 128 configured for storing information associated with the access token, the unique ID associated with the tenant device(s) 134A-N, the artifact identifier and the information associated with artifact, such as artifacts and application hosted on the cloud platform 114. Further, the repository 128 is further configured for storing information associated with each user profile registered in the cloud platform 114. The user profile may include, such as but not limited to, profile identifier, tenant ID, artifacts subscribed, roles and permissions, and so on. Further, the repository 128 may be divided into three levels for handling traffic levels of data. The communication interface 610 is configured for establishing communication sessions between the tenant device(s) 134A-N and the cloud computing system 102. Also, the communication interface is configured for establishing secure communication sessions between the industrial assets 108A-N, the tenant device(s) 134A-N and the cloud computing system 102. The display unit 612 is configured for displaying the artifact data (e.g., response) to which the access is provided to the tenant device(s) 134A-N via a graphical user interface. The bus 614 acts as interconnect between various components of the cloud computing system 600. The component such as the input device 608 is well known to the person skilled in the art and hence the explanation is thereof omitted.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.
100, 600- cloud computing environment
102-cloud computing system
104-network
106-industrial plant
108A-N-industrial assets
110-cloud interface
112- cloud hardware and OS
114-cloud platform
116-authentication module
118- request handler
120- validation module
122- tenant access management module
124- artifact management module
126-token management module
128-repository
130- artifact development module
132- artifact provisioning and monitoring module
134A-N- tenant devices
302- tenant validation module
304- request verification module
306- token attribute validation module
602-processor(s)
604-memory
606-storage unit
608-Input-output unit
610-communication interface
612-display unit
614-interface

## Claims

1. A method for providing secure access to artifacts deployed in a cloud computing environment (100), the method comprising:
receiving a request for accessing an artifact from a tenant device (134A-N) via a communication network (104), wherein the request comprises an access token having a unique identifier (ID) associated with the tenant device (134A-N) and an artifact identifier associated with the artifact;
validating the access token with respect to the artifact requested to be accessed using the unique ID associated with the tenant device (134A-N); and
providing access to the artifact to the tenant device (134A-N) based on the successful validation of the access token.

2. The method according to claim 1, further comprising:
generating the access token for providing access the artifact;
assigning the access token to the tenant device (134A-N) for accessing the artifact; and
storing the access token corresponding to the tenant device (134A-N) in a repository.

3. The method according to claims 1 and 2, wherein the token comprises one or more token attributes, the unique ID associated with the tenant device (134A-N), and the artifact identifier.

4. The method according to any of the claims 1 to 3, wherein validating the access token with respect to the artifact requested to be accessed using the unique ID associated with the tenant device (134A-N) comprises:
determining whether the access token received from the tenant device (134A-N) is valid based on the unique ID associated with the tenant device (134A-N);
determining one or more tenant privileges associated with the access token if the access token is determined to be valid; and
sending a validation successful message to the tenant device (134A-N) based on the determined one or more tenant privileges.

5. The method according to any of the claims 1 to 3, wherein validating the access token with respect to the artifact requested to be accessed using the unique ID associated with the tenant device(134A-N) comprises:
determining whether the access token received from the tenant device(134A-N)is valid based on the artifact identifier;
if the access token is determined to be valid, then determining whether the access token is used previously or not; and
sending a validation successful message to the tenant device(134A-N) if the access token is not used previously.

6. The method according to claim 1 or 4, further comprising:
sending a validation error message to the tenant device (134A-N) if the access token is invalid.

7. The method according to claim 1 or 5, further comprising:
sending a validation error message to the tenant device (134A-N) if the access token is used previously.

8. A cloud computing system (102, 600) for providing secure access to an artifact, wherein the cloud computing system (102, 600) comprises:
one or more processor(s)(602); and
a memory (604) coupled to the one or more processor (s) (602), wherein the memory (604) comprises an authentication module (116) stored in the form of machine-readable instructions executable by the one or more processor(s) (602), wherein the authentication module (116) is capable of performing a method according to any of the claims 1-7

9. A cloud computing environment (100) comprising:
a system claimed in claim 8; and
a plurality of tenant devices (134A-N) communicatively coupled to the system via a network (104).

10. A computer-program product, having machine-readable instructions stored therein, that when executed by a processor(s) (602), cause the processor(s) (602) to perform method steps according to any of the claims 1-7.
